# FASCICULE DE BREVET EUROPEEN

(11) **EP 0 520 866 B1**
(45) Date de publication et mention de la délivrance du brevet: **30.08.1995**
(21) Numéro de dépôt: 92401721.3
(22) Date de dépôt: 19.06.1992
(51) Int. Cl.: F41G 3/32

(54) **Procédé d'harmonisation d'axes de visée de caméras**
Verfahren zur Harmonisierung von Kamerazielachsen
Method for harmonisation of camera sighting axes

(30) Priorité: 25.06.1991 FR 9107805
(43) Date de publication de la demande: 30.12.1992
(73) Titulaire: EUROCOPTER FRANCE, F-13725 Marignane Cédex (FR)
(72) Inventeur: Giacometti, Emmanuel Michel, F-13330 Pelissanne (FR)
(74) Mandataire: Bonnetat, Christian

(56) Documents cités:
- EP-A- 0 256 915
- EP-A- 0 419 320
- FR-A- 2 580 865
- US-A- 4 732 470

## Description

La présente invention concerne un procédé et un dispositif permettant de déterminer l'orientation de la ligne de visée au repos d'un dispositif de prise de vue soumis à des vibrations, et permettant aussi de déterminer, et de réduire, l'erreur d'harmonisation d'un tel dispositif de prise de vue par rapport à un autre dispositif de prise de vue.

On connaît des procédés et des systèmes permettant de déterminer l'orientation de la ligne de visée d'un dispositif de prise de vue fournissant une image vidéo, de déterminer et de réduire l'erreur d'harmonisation de ce dispositif de prise de vue par rapport à un autre.

Ainsi, le brevet français FR-A-2 602 389 décrit un système permettant d'ajuster les positions angulaires de deux caméras vidéo, montées sur un aéronef, par exemple solidaires respectivement d'un viseur et d'un canon. Le principe utilisé consiste à diriger la ligne de visée de chaque caméra vers un objet situé à une distance suffisante pour que l'erreur de parallaxe soit négligeable. Les signaux vidéo issus des deux caméras sont entrelacés sur un écran vidéo, ce qui fait se superposer deux images décalées, chacune significative de l'orientation de la ligne de visée de la caméra correspondante.

On peut ainsi déterminer, en fonction du décalage des deux images sur l'écran, l'erreur d'harmonisation.

On peut, de plus, réduire et annuler cette erreur en ajustant les positions angulaires relatives des lignes de visée des deux caméras, en faisant tourner l'une de celles-ci jusqu'à amener en coïncidence les deux images. Ainsi, le viseur utilisé par le pilote de l'aéronef se trouve harmonisé avec le canon.

Un tel système présente cependant l'inconvénient de nécessiter une bonne stabilité des caméras, de façon à avoir des images nettes, ce qui impose d'effectuer au sol ce réglage, en l'absence de vibrations.

Or, dans le cas d'un aéronef, par exemple, la structure de celui-ci est susceptible de se déformer lorsqu'il est en vol, sous l'effet de la modification des faces d'appui des forces aérodynamiques et/ou des accélérations.

La présente invention, relative à la détermination de l'orientation de la ligne de visée d'un dispositif de prise de vue soumis à des vibrations, à la détermination et à la correction de l'erreur d'harmonisation d'un tel dispositif de prise de vue par rapport à un second dispositif de prise de vue, vise à résoudre ce problème.

A cet effet, selon l'invention, le procédé pour la détermination de la position au repos de la ligne de visée d'un dispositif de prise de vue, soumis à des vibrations périodiques et délivrant un signal vidéo représentatif de l'image du champ qu'il observe, est remarquable en ce qu'il comporte les étapes suivantes :
- on détecte lesdites vibrations et, à partir d'elles, on engendre une succession de signaux de synchronisation ayant chacun une phase déterminée dans la période desdites vibrations ;
- on engendre, à partir de ladite succession de signaux de synchronisation, une succession de signaux d'échantillonnage ayant chacun un même retard réglable par rapport au signal de synchronisation correspondant ;
- on échantillonne ledit signal vidéo au moyen de la succession desdits signaux d'échantillonnage, ce qui fournit une succession de signaux vidéo échantillonnés ;
- on reconstitue, sur un dispositif de visualisation, ladite image, au moyen de la succession desdits signaux vidéo échantillonnés, ce qui fournit une image reconstituée ; et
- on détermine la position de l'image reconstituée au repos correspondant à la ligne de visée au repos, à partir de l'image reconstituée.

Ainsi, le dispositif de prise de vue mettant un certain temps pour passer d'une position angulaire extrême à l'autre, lors de ses vibrations, on ne lit cycliquement par échantillonnage des tronçons de signal vidéo, représentatifs chacun d'une partie de l'image, par exemple une ligne, que lorsque ce dispositif de prise de vue a une orientation instantanée bien définie. Ceci est réalisé en commandant l'échantillonnage à un instant bien déterminé dans la période de la vibration, défini par un retard par rapport à un instant de référence, fixe par rapport à ladite période de vibration, fourni par le détecteur de mouvement, qui peut, par exemple, être un détecteur d'accélération.

Lorsqu'un nombre suffisant de tronçons de signal vidéo a été lu par échantillonnage, chacun représentatif d'une partie différente de l'image, l'ensemble de ces tronçons permet de reconstituer l'image totale relative à la direction instantanée de la ligne de visée, et ceci sans flou dû au mouvement vibratoire.

En particulier, le procédé selon l'invention permet de déterminer la position de l'image reconstituée au repos correspondant à la ligne de visée au repos, au moyen des étapes suivantes :
- on détermine les positions extrêmes du déplacement de l'image reconstituée sur le dispositif de visualisation, en faisant varier ledit retard réglable ; et
- on ajuste ledit retard réglable de façon telle que l'image reconstituée occupe une position à mi-distance entre lesdites positions extrêmes.

Ainsi, en faisant varier ledit retard variable sur une plage de temps au moins égale à une période du mouvement vibratoire, on peut repérer les positions extrêmes occupées par l'image et en déduire la position médiane, correspondant à l'orientation de la ligne de visée au repos, c'est-à-dire en l'absence de vibrations.

De façon avantageuse, le procédé selon l'invention permet d'engendrer, lors de chaque période de la vibration, deux signaux de synchronisation espacés d'une demi-période de vibration, ce qui entraîne la formation d'une paire d'images reconstituées.

Ainsi, on obtient deux images reconstituées occupant des positions symétriques par rapport à la position médiane du déplacement possible, ce qui permet d'obtenir simultanément les deux positions extrêmes de l'image reconstituée.

En particulier, le fait de disposer d'une paire d'images reconstituées présente l'avantage de permettre d'ajuster ledit retard réglable, de façon à superposer les images reconstituées de ladite paire d'images, sur le dispositif de visualisation.

Le réglage du retard correspondant à une image reconstituée relative à l'axe de visée du dispositif de visée peut ainsi s'effectuer en utilisant la symétrie des deux images par rapport à la position correspondant à l'image relative à la ligne de visée au repos, ce qui évite d'avoir à repérer les positions extrêmes d'une image, et évite l'erreur qui y est associée.

Par ailleurs, le procédé d'harmonisation d'un premier dispositif de prise de vue, soumis à des vibrations périodiques, par rapport à un second dispositif de prise de vue, orienté de façon fixe sensiblement dans la même direction que le premier dispositif de prise de vue, fournissant respectivement un premier signal vidéo et un second signal vidéo, respectivement représentatifs d'une première image et d'une seconde image correspondant respectivement à l'image de leur champ observé, est remarquable en ce qu'il comporte les étapes suivantes :
- on détecte lesdites vibrations et, à partir d'elles, on engendre une succession de signaux de synchronisation ayant chacun une phase déterminée dans la période desdites vibrations ;
- on engendre, à partir de ladite succession de signaux de synchronisation, une succession de signaux d'échantillonnage ayant chacun un même retard réglable par rapport au signal de synchronisation correspondant ;
- on échantillonne alternativement lesdits premier signal vidéo et second signal vidéo au moyen de la succession desdits signaux d'échantillonnage, ce qui fournit une succession de premiers signaux vidéo échantillonnés et de seconds signaux vidéo échantillonnés ;
- on reconstitue, sur un dispositif de visualisation, lesdites première image et seconde image, au moyen de la succession desdits signaux vidéo échantillonnés, ce qui fournit une première image reconstituée et une seconde image reconstituée au repos ;
- on détermine les positions respectives de la première image reconstituée au repos et de la seconde image reconstituée au repos correspondant respectivement à la ligne de visée au repos du premier dispositif de prise de vue et à la ligne de visée du second dispositif de prise de vue, à partir de la première image reconstituée et de la seconde image reconstituée au repos ; et
- on détermine, à partir desdites positions respectives de la première image reconstituée au repos et de la seconde image reconstituée au repos, l'écart angulaire d'harmonisation desdits premier dispositif de prise de vue et second dispositif de prise de vue.

On obtient ainsi deux images stables, chacune relative à un dispositif de prise de vue, dont on peut, pour chacun d'eux, déterminer la position médiane correspondant à l'image reconstituée relative à la ligne de visée au repos, en l'absence de vibrations. En comparant ces positions médianes, on peut alors déterminer l'erreur d'harmonisation entre les deux lignes de visée des deux dispositifs de prise de vue.

En particulier, la détermination des positions respectives de la première image reconstituée au repos et de la seconde image reconstituée au repos peut se faire par les étapes suivantes :
- on détermine les positions extrêmes du déplacement de la première image reconstituée en faisant varier ledit retard réglable ; et
- on ajuste ledit retard réglable de façon telle que ladite première image reconstituée occupe une position à mi-distance entre lesdites positions extrêmes.

Ainsi, par un seul réglage, on détermine les positions médianes des lignes de visée des deux dispositifs de prise de vue, ce qui permet d'en déduire l'erreur d'harmonisation.

De plus, le procédé selon l'invention permet d'engendrer, pendant chaque période de la vibration, deux signaux de synchronisation espacés d'une demi-période de vibration, ce qui entraîne la formation d'une paire de premières images reconstituées et d'une seconde image reconstituée au repos, correspondant respectivement au premier signal vidéo et au second signal vidéo.

On peut ainsi, pour le dispositif de prise de vue qui vibre, disposer de deux images reconstituées disposées symétriquement par rapport à leur position médiane, ce qui permet de déterminer facilement cette position médiane.

En particulier, le procédé selon l'invention permet d'ajuster ledit retard réglable de façon que, sur le dispositif de visualisation, les deux images reconstituées de ladite paire de premières images reconstituées se superposent.

Le réglage correspondant à la position médiane du déplacement de l'image reconstituée de chaque dispositif de prise de vue est ainsi effectué simplement, sans qu'il y ait à repérer les positions extrêmes du déplacement.

Ce procédé, appliqué à un premier dispositif de prise de vue et à un second dispositif de prise de vue, dont au moins l'un est apte à pivoter, sous l'effet d'une commande de pivotement, selon une direction de pivotement permettant de régler l'harmonisation desdits dispositifs de prise de vue, peut être suivi de l'étape suivante :
- on actionne ladite commande de pivotement de façon à rapprocher entre elles lesdites première image reconstituée au repos et seconde image reconstituée au repos.

On règle ainsi l'harmonisation des deux dispositifs de prise de vue tout en observant le résultat du réglage sur le dispositif de visualisation, ce qui assure une bonne rapidité et précision pour ce réglage.

Par ailleurs, selon l'invention, le procédé de détermination de l'erreur d'harmonisation d'une première ligne de visée d'un premier dispositif de prise de vue, soumis à des premières vibrations périodiques, par rapport à une seconde ligne de visée d'un second dispositif de prise de vue, soumis à des secondes vibrations périodiques, orientée sensiblement dans la même direction que la première ligne de visée, fournissant respectivement un premier signal vidéo et un second signal vidéo, respectivement représentatifs de l'image de leur champ observé, est remarquable en ce qu'il comporte les étapes suivantes :
- on détecte lesdites premières vibrations et, à partir d'elles, on engendre une succession de premiers signaux de synchronisation ayant chacun une phase déterminée dans la période desdites premières vibrations ;
- on détecte lesdites secondes vibrations et, à partir d'elles, on engendre une succession de seconds signaux de synchronisation ayant chacun une phase déterminée dans la période de chacune desdites secondes vibrations ;
- on engendre, à partir de ladite succession de premiers signaux de synchronisation, une succession de premiers signaux d'échantillonnage ayant chacun un même retard réglable par rapport au premier signal de synchronisation correspondant ;
- on engendre, à partir de ladite succession de seconds signaux de synchronisation, une succession de seconds signaux d'échantillonnage ayant chacun un même retard réglable par rapport au second signal de synchronisation correspondant ;
- on échantillonne lesdits premier signal vidéo et second signal vidéo au moyen, respectivement, de la succession desdits premier signal d'échantillonnage et second signal d'échantillonnage, ce qui fournit respectivement une succession de premiers signaux vidéo échantillonnés et une succession de seconds signaux vidéo échantillonnés ;
- on reconstitue, sur un dispositif de visualisation, lesdites première image et seconde image, au moyen desdites succession de premiers signaux vidéo échantillonnés et succession de seconds signaux échantillonnés, ce qui fournit une première image reconstituée et une seconde image reconstituée ;
- on détermine les positions respectives de la première image reconstituée au repos et de la seconde image reconstituée au repos correspondant respectivement à la ligne de visée au repos du premier dispositif de prise de vue et à la ligne de visée au repos du second dispositif de prise de vue, à partir des première image reconstituée et seconde image reconstituée ; et
- on détermine, à partir desdites positions respectives de la première image reconstituée au repos et de la seconde image reconstituée au repos, l'écart angulaire d'harmonisation desdites première ligne de visée et seconde ligne de visée.

On peut ainsi déterminer la position médiane de l'image d'un dispositif de prise de vue, indépendamment de la fréquence ou de la phase relative des vibrations que subit l'autre dispositif de prise de vue.

En particulier, ce procédé permet de déterminer les positions respectives de la première image reconstituée au repos correspondant à la première ligne de visée au repos et de la seconde image reconstituée au repos correspondant à la seconde ligne de visée au repos, au moyen des étapes suivantes :
- on détermine les premières positions extrêmes du déplacement de la première image reconstituée du premier dispositif de prise de vue en faisant varier ledit premier retard réglable ;
- on ajuste ledit premier retard réglable de façon telle que ladite première image reconstituée occupe une position à mi-distance entre lesdites premières positions extrêmes ;
- on détermine les secondes positions extrêmes du déplacement de la seconde image reconstituée du second dispositif de prise de vue, en faisant varier ledit second retard réglable ; et
- on ajuste ledit second retard réglable de façon telle que ladite seconde image reconstituée occupe une position à mi-distance entre lesdites secondes positions extrêmes.

On détermine ainsi, pour chaque dispositif de prise de vue, les positions extrêmes de l'image reconstituée et on en déduit la position médiane de l'image reconstituée correspondant à la ligne de visée au repos.

De plus, ce procédé présente l'avantage de permettre d'engendrer deux signaux de synchronisation espacés d'une demi-période de vibration, ce qui entraîne la formation d'une paire de premières images reconstituées et d'une paire de secondes images reconstituées, correspondant respectivement au premier signal vidéo et au second signal vidéo.

On peut ainsi choisir une référence de temps propre aux vibrations de chaque dispositif de prise de vue, ce qui donne toute liberté pour choisir, pour chaque détecteur de mouvement, un instant d'échantillonnage, dans la période de la vibration, qui soit bien spécifique de la position instantanée du dispositif de prise de vue. Ceci est particulièrement intéressant lorsque le dispositif de prise de vue est soumis à des mouvements vibratoires composites, susceptibles de donner lieu à une trajectoire vibratoire non monotone lors de chaque demi-période, le dispositif détecteur de mouvement risquant alors de produire des signaux de synchronisation indésirés.

En particulier, ce procédé permet d'ajuster lesdits premier retard réglable et second retard réglable, de façon que, pour chaque paire desdites images reconstituées, lesdites première image reconstituée et seconde image reconstituée se superposent, sur le dispositif de visualisation.

On peut ainsi déterminer rapidement la position de l'image reconstituée de chaque dispositif de prise de vue correspondant à sa ligne de visée au repos.

Ce procédé, appliqué à un premier dispositif de prise de vue et à un second dispositif de prise de vue, dont au moins l'un est apte à pivoter, sous l'effet d'une commande de pivotement, selon une direction de pivotement permettant de régler l'harmonisation desdits dispositifs de prise de vue, peut être suivi de l'étape suivante :
- on actionne ladite commande de pivotement de façon à rapprocher les images reconstituées respectives, relatives à la direction au repos du premier dispositif de prise de vue et du second dispositif de prise de vue.

On règle ainsi rapidement et avec précision l'harmonisation des dispositifs de prise de vue en observant le résultat du réglage sur le dispositif de visualisation.

Pour la mise en oeuvre dudit procédé, un dispositif de détermination de l'orientation, par rapport à un repère fixe, de la ligne de visée au repos d'un premier dispositif de prise de vue soumis à des vibrations, et fournissant un premier signal vidéo représentatif de l'image de son champ, est remarquable en ce qu'il comporte :
- un détecteur de mouvement, détectant lesdites vibrations, et produisant un signal de synchronisation ayant une phase déterminée par rapport auxdites vibrations ;
- un circuit de mise en forme, recevant ledit signal de synchronisation et fournissant, en réponse, un signal d'échantillonnage ;
- un échantillonneur, recevant ledit premier signal vidéo sur une première entrée de signal, apte à échantillonner ledit premier signal vidéo et à fournir un premier signal vidéo échantillonné, sous la commande dudit signal d'échantillonnage appliqué à une entrée de commande d'échantillonnage ;
- une mémoire, recevant et mémorisant ledit premier signal vidéo échantillonné ;
- un dispositif de visualisation, recevant, de ladite mémoire, une information d'image et fournissant, en réponse, une image reconstituée ;
- une base de temps, commandant le séquencement du fonctionnement de ladite mémoire.

L'échantillonnage du signal vidéo s'effectue ainsi lorsque le dispositif de prise de vue a une orientation instantanée identique, d'un échantillonnage à l'autre, ce qui permet de réunir des tronçons de signal vidéo relatifs à une même orientation du dispositif de prise de vue, et donne une image reconstituée exempte de flou dû aux vibrations.

De plus, ledit circuit de mise en forme peut fournir un signal de commande d'échantillonnage retardé par rapport audit signal de synchronisation.

L'image reconstituée a ainsi une position, sur le dispositif de visualisation, qui dépend dudit retard.

Par ailleurs, ledit détecteur de mouvement peut avantageusement fournir deux signaux de synchronisation lors de chaque période desdites vibrations, espacés de la moitié de ladite période.

Les deux images reconstituées encadrent la position de l'image correspondant à la ligne de visée au repos, ce qui permet de déterminer la position de cette dernière.

Ledit circuit de mise en forme-peut, de plus, comporter une entrée de commande de retard permettant de régler ledit retard.

En modifiant ce retard, on peut ainsi déterminer, par observation de l'image reconstituée, la position de l'image correspondant à la ligne de visée au repos.

Par ailleurs, un dispositif de détermination de l'erreur d'harmonisation entre une première ligne de visée d'un premier dispositif de prise de vue associé à un dispositif pour la détermination de la position au repos de cette première ligne de visée, et une seconde ligne de visée d'un second dispositif de prise de vue, orientée de façon fixe sensiblement dans la même direction que la première ligne de visée, fournissant un second signal vidéo représentatif d'une seconde image représentant le champ qu'il observe, est remarquable en ce que ledit second signal vidéo est appliqué à une seconde entrée de signal dudit échantillonneur, et en ce que ladite base de temps fournit, audit échantillonneur, un signal de commutation faisant alternativement apparaître, en sortie dudit échantillonneur, un signal vidéo échantillonné respectivement représentatif desdits premier signal vidéo et second signal vidéo.

On peut ainsi faire apparaître simultanément, sur le dispositif de visualisation, les images reconstituées relatives aux deux dispositifs de prise de vue, ce qui permet de déterminer l'erreur d'harmonisation, et permet de la réduire en commandant la rotation de l'un des dispositifs de prise de vue.

Les figures du dessin annexé feront bien comprendre comment l'invention peut être réalisée. Sur ces figures, des références identiques désignent des éléments semblables.

La figure 1 est un schéma synoptique illustrant le procédé de détermination de l'orientation d'un dispositif de prise de vue.

La figure 2 est un diagramme de temps illustrant l'échantillonnage.

La figure 3 est une représentation schématique du rangement en mémoire des divers échantillons de signal vidéo.

La figure 4 est un schéma synoptique illustrant le procédé de détermination de l'erreur d'harmonisation de deux dispositifs de prise de vue, en utilisant un seul échantillonneur.

La figure 5 est un schéma synoptique illustrant le procédé de détermination de l'erreur d'harmonisation de deux dispositifs de prise de vue, susceptibles d'être soumis respectivement à des vibrations différentes entre elles.

La figure 6 est un schéma synoptique montrant l'agencement, selon l'invention, des constituants d'un dispositif de détermination de l'orientation d'un dispositif de prise de vue soumis à des vibrations, ainsi que de ceux d'un dispositif de détermination de l'erreur d'harmonisation entre deux dispositifs de prise de vue.

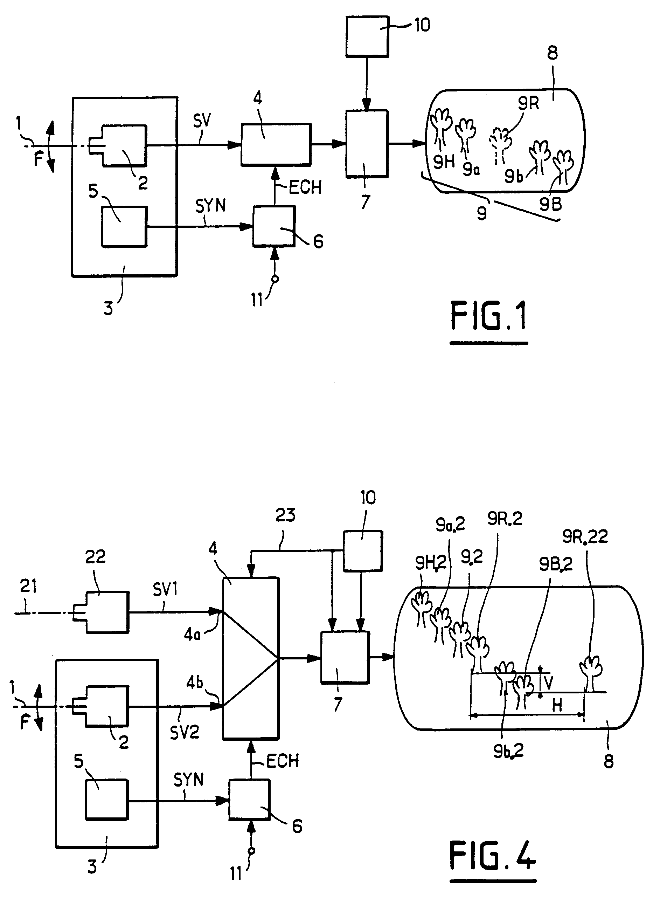

Le dispositif, conforme à la présente invention et représenté sur la figure 1, est destiné à la détermination de la position au repos de la ligne de visée 1 d'un dispositif de prise de vue 2 soumis à des vibrations f, symbolisées par des flèches.

Ce dispositif de prise de vue 2, solidaire d'un châssis 3, est orienté vers une scène et fournit un signal vidéo SV représentatif de l'image, constituée d'un ensemble de points, du champ observé. De façon connue, il comporte une électronique de balayage séquentiel, et ledit signal vidéo SV est représentatif de cet ensemble de points. Du fait que le dispositif de prise de vue 2 vibre au rythme défini par la période desdites vibrations f, chacun de ces points est lu, par l'électronique de balayage, à un instant qui correspond à une orientation instantanée de la ligne de visée 1, qui est différente de celle des autres points de la même image. Le signal vidéo SV d'une image étant constitué par la juxtaposition des signaux vidéo représentatifs des divers points de l'image, l'image ainsi constituée se trouve avoir une distorsion et un flou du fait que les divers points la constituant ont été lus, par l'électronique de balayage, à des instants différents, donc selon des orientations de la ligne de visée 1 qui ne sont pas exactement identiques.

De façon à éviter ces défauts, selon l'invention, le signal vidéo SV est échantillonné par un échantillonneur 4 recevant ledit signal vidéo SV sur une entrée de signal. Cet échantillonneur 4 ne laisse passer ce signal vidéo SV que lorsque la ligne de visée 1 a une orientation préalablement définie, ce qui élimine ainsi le signal vidéo SV relatif aux autres orientations de cette ligne de visée 1. De plus, comme il vient d'être expliqué, le dispositif de prise de vue 2 bouge pendant le balayage de l'ensemble des lignes constituant une image. Pour s'en affranchir, on ne prend en compte, au moyen de l'échantillonneur 4, qu'un tronçon temporel, assez court par rapport à la durée d'une image, du signal vidéo SV de l'image, qui correspond à des points de cette image qui ont été balayés, par l'électronique de balayage du dispositif de prise de vue 2, à des instants très voisins, donc entre lesquels le dispositif de prise de vue 2 a peu bougé. Par exemple, un tel tronçon du signal vidéo SV est constitué du signal vidéo représentant une ou quelques lignes successives de la trame de l'image. De façon à reconstituer l'image totale, il faut répéter cette opération à chaque passage de la ligne de visée 1 dans ladite orientation préalablement définie, en échantillonnant alors des tronçons de signal vidéo SV relatifs à d'autres parties de l'image.

De façon à disposer d'une référence temporelle déterminant l'instant de passage selon ladite orientation préalablement définie, c'est-à-dire l'instant auquel il faut échantillonner le signal vidéo SV, on dispose un détecteur de mouvement 5, solidaire du châssis 3, par exemple un accéléromètre, qui fournit un signal de synchronisation SYN ayant une phase bien définie par rapport à la période des vibrations f. Dans le cas d'un accéléromètre, ledit signal de synchronisation SYN est délivré lorsque l'accélération a une valeur bien définie. Ce signal de synchronisation SYN est appliqué à un circuit de mise en forme 6 qui fournit, en réponse, avec un retard réglable, un signal d'échantillonnage ECH de durée déterminée, appliqué à une entrée d'échantillonnage dudit échantillonneur 4, et qui a pour effet d'autoriser le passage du signal vidéo SV vers la sortie dudit échantillonneur 4, qui est reliée à une mémoire 7 commandant le rafraîchissement de l'image affichée sur un dispositif de visualisation 8, fournissant une image reconstituée 9.

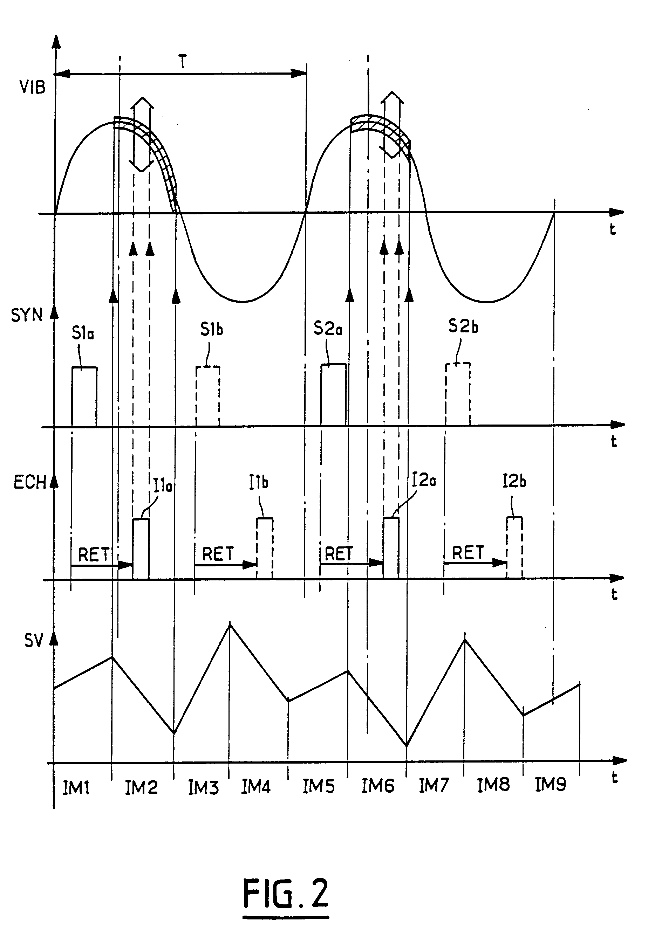

Une base de temps 10 commande le séquencement du fonctionnement, en écriture et en lecture, de la mémoire 7, à un rythme non synchronisé avec celui des vibrations f. De ce fait, comme cela sera expliqué en détail en regard de la figure 2, l'instant d'échantillonnage a une position variable dans la période de la trame de l'image, ce qui fait que l'on échantillonne successivement des tronçons de signal vidéo SV relatifs à diverses parties de l'image. Ayant mémorisé un nombre suffisant de tronçons, on peut ainsi reconstituer l'image totale. Ceci suppose que la scène observée n'a pas bougé pendant la durée de prise des échantillons successifs.

Ayant ainsi obtenu une image reconstituée 9 stable, relative à une orientation déterminée mais non connue, de la ligne de visée 1, on détermine alors la position de l'image reconstituée 9R relative à la position au repos de la ligne de visée 1.

Pour ce faire, on fait varier, dans la période de la vibration f, l'instant auquel on effectue l'échantillonnage, ceci en retardant le signal d'échantillonnage ECH au moyen d'une commande appliquée sur une entrée de commande de retard 11 du circuit de mise en forme 6. Le déphasage ainsi introduit par ce retard permet, en faisant varier celui-ci, d'obtenir une succession d'images reconstituées 9 pour la totalité de la période de la vibration f, donc de déterminer les positions extrêmes 9H et 9B du déplacement de l'image reconstituée 9, correspondant aux amplitudes extrêmes du déplacement angulaire du dispositif de prise de vue 2. La position de l'image reconstituée 9R, correspondant à l'orientation au repos du dispositif de prise de vue 2, se trouve alors devoir être à mi-distance entre ces deux positions extrêmes 9H et 9B. Ayant repéré, sur le dispositif de visualisation 8, ces positions extrêmes 9H et 9B, il suffit alors d'ajuster le retard du signal d'échantillonnage ECH pour amener l'image reconstituée 9 sur la position de l'image reconstituée 9R relative à l'orientation au repos du dispositif de prise de vue 2, déterminée par interpolation à partir des positions extrêmes 9H et 9B, et située à mi-distance de celles-ci.

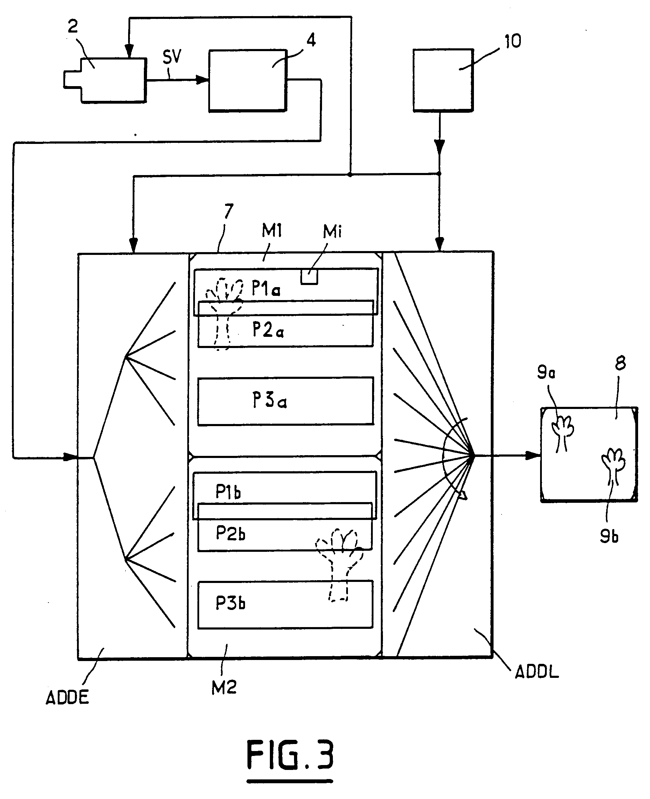

Dans une variante, qui sera expliquée en détail en regard de la figure 3, destinée à faciliter le réglage final de la position de l'image reconstituée 9R, le détecteur de mouvement 5 engendre deux signaux de synchronisation SYN, lors de chaque période de la vibration f, espacés d'une demi-période de cette vibration f. Ainsi, on obtient deux images reconstituées 9a et 9b occupant une position symétrique par rapport à la position de l'image reconstituée 9R relative à l'orientation au repos de la ligne de visée 1. Il suffit alors d'ajuster le retard réglable pour faire se superposer ces deux images reconstituées 9a et 9b, ce qui détermine la position de l'image reconstituée 9R recherchée.

La figure 2 est un diagramme de temps illustrant le séquencement des divers signaux. La valeur de la variation angulaire de l'orientation de la ligne de visée 1, due aux vibrations f, est représentée par une sinusoïde de période T dont l'amplitude VIB varie avec le temps. Lorsque cette amplitude VIB passe par une certaine valeur, une première impulsion S1a du signal de synchronisation SYN, appartenant à une première série d'impulsions de synchronisation, est engendrée par le détecteur de mouvement 5. Après un retard RET par rapport au début de cette première impulsion S1a, le circuit de mise en forme 6 engendre un signal d'échantillonnage ECH sous la forme d'une première impulsion I1a de durée prédéterminée, appartenant à une première série d'impulsions d'échantillonnage. Cette première impulsion I1a permet la transmission, vers la mémoire 7, du signal vidéo SV présent pendant la durée de cette première impulsion I1a. Dans un but de clarté, ce signal vidéo SV est représenté sous la forme d'une suite de segments inclinés, correspondant chacun à une image IMi, avec i = 1 à 9 sur cette figure, appartenant à la suite des images successives prises par le dispositif de prise de vue 2 selon ses diverses orientations. On voit ainsi qu'une partie du signal vidéo SV de l'image IM2 est échantillonnée, cette partie correspondant approximativement au début de cette image IM2. Sur la sinusoïde représentant la vibration VIB, le trait renforcé correspond à la durée pendant laquelle existe l'image IM2, et la double flèche associée indique l'instant pendant lequel la première impulsion I1a autorise le passage du signal vidéo SV de cette image IM2 ; comme expliqué ci-dessus, cet instant d'échantillonnage a une position fixée par rapport à ladite période T, pour un retard RET fixé.

Lors de la période T suivante de la vibration f, il est engendré une deuxième impulsion de synchronisation S2a, exactement espacée, par rapport à cette première impulsion de synchronisation S1a, de la valeur de cette période T. De même, il est engendré une deuxième impulsion d'échantillonnage I2a, retardée du retard RET par rapport à cette deuxième impulsion I2a, ce qui fait que cette deuxième impulsion I2a est retardée d'une période T par rapport à la première impulsion I1a, et correspond donc à la même orientation instantanée de la ligne de visée 1. L'image prise alors par le dispositif de prise de vue 2 est l'image IM6, dans cet exemple. On remarque qu'il n'y a pas un nombre entier d'images pendant la période T des vibrations f. De ce fait, la deuxième impulsion d'échantillonnage I2a n'a pas la même position relative dans la durée de cette image IM6 ; dans cet exemple, on voit que l'on va laisser passer, vers la mémoire 7, une partie du signal vidéo SV correspondant plutôt à la fin de cette image IM6. La position temporelle de cette image IM6, ainsi que l'instant d'échantillonnage correspondant à la deuxième impulsion I2a, sont reportés sur la sinusoïde VIB représentant la vibration f. On voit que cet instant d'échantillonnage, marqué par une flèche double, a une position relative, par rapport à la période T, qui est inchangée par rapport à la période T précédente. Par contre, l'image IM6 qui est échantillonnée n'occupe pas la même position relative, par rapport à la période T, qu'occupait l'image IM2 précédemment échantillonnée. Ceci explique que l'on transmet, à la mémoire 7, un échantillon du signal vidéo SV correspondant à une autre partie de l'image que perçoit le dispositif de prise de vue 2 lorsqu'il est orienté dans la direction définie par la position temporelle des impulsions d'échantillonnage. Ainsi, ne pouvant, du fait de la vibration f, prendre d'un seul tenant tout le signal vidéo SV relatif à une orientation bien précise de la ligne de visée 1, on effectue Ces échantillonnages successifs, que l'on mémorise, relatifs à des parties différentes de l'image perçue selon ladite direction, et reconstitue cette image en juxtaposant ces signaux vidéo représentatifs, chacun, d'une partie d'image.

Ceci suppose que la fréquence des vibrations f n'est pas synchronisée avec celle de répétition des images engendrées par le dispositif de prise de vue 2, de façon qu'il y ait un glissement de l'instant de l'échantillonnage par rapport à la période T, et que les diverses parties de l'image soient échantillonnées. Ceci suppose aussi que la scène observée choisie n'a pas évolué pendant le temps mis pour reconstituer une image, par exemple 2 secondes.

Le fait que les divers échantillons du signal vidéo SV ne soient pas synchronisés entre eux ne présente pas d'inconvénient : au cas où une partie d'un signal vidéo échantillonné correspond à une partie homologue d'un signal échantillonné précédent, elle écrase, dans la mémoire 7, le signal mémorisé plus ancien, ce qui assure un rafraîchissaient de l'information d'image ; de même, une absence de rafraîchissement d'une faible partie de l'image reconstituée 9R n'est pas gênante.

Sur cette même figure 2, on a représenté une seconde série d'impulsions de synchronisation S1b et S2b, qui sont engendrées lorsque la vibration a une amplitude VIB de même valeur absolue, et de signe opposé, que celle pour laquelle sont engendrées les impulsions de synchronisation S1a et S2a. De ce fait, cette seconde série d'impulsions S1b et S2b est déphasée d'une demi-période T par rapport aux impulsions de synchronisation S1a et S2a. Ainsi, les impulsions d'échantillonnage I1b et I2b, engendrées respectivement à partir de ces impulsions de synchronisation S1b et S2b, sont elles aussi déphasées d'une demi-période T par rapport aux impulsions correspondantes I1a et I2a. Cela amène à échantillonner un signal vidéo SV relatif à une orientation de la ligne de visée 1 qui est disposée symétriquement, par rapport à la position au repos, à l'orientation correspondant à la première série d'échantillonnages exposée ci-dessus. On obtient ainsi une seconde image reconstituée 9b occupant, par rapport à l'image reconstituée au repos 9R sur le dispositif de visualisation 8, une position symétrique de la première image 9a.

Ces deux séries d'échantillonnages s'effectuant de façon entrelacée dans le temps, la mémoire 7 comprend deux zones M1 et M2, représentées sur la figure 3, chacune correspondant à une image reconstituée 9a ou 9b. Sur le dessin de la mémoire, la position des informations représentatives de chacune des images reconstituée 9a et 9b est schématisée par un trait pointillé reproduisant lesdites images.

Chaque zone M1 ou M2 est constituée d'un ensemble de points mémoires Mi contenant l'information relative à un point spécifique de l'image concernée. Lorsqu'arrive un signal vidéo SV échantillonné, représentant des points successifs d'image, par exemple quelques lignes de la trame de l'image, il est aiguillé successivement, au moyen d'un système d'adressage en écriture ADDE de la mémoire 7, vers les différentes positions mémoires correspondant à ces points mémoires Mi, ce qui rafraîchit ainsi l'information d'image, tandis que l'information relative aux autres points d'image reste inchangée. Cette mémorisation peut se faire de façon analogique ou bien de façon numérique, avec conversion préalable analogique/numérique, dans le cas où le signal vidéo SV est analogique. Pour déterminer à quelle partie de l'image correspond un signal échantillonné qui arrive à la mémoire 7, il suffit, par exemple, de piloter, au moyen de la base de temps 10, la trame de l'électronique de balayage de l'image prise par le dispositif de prise de vue 2 ; ainsi, cette base de temps 10 est à même de savoir, à tout instant, quelle est la partie de la trame d'image qui vient d'être lue, et peut donc l'aiguiller vers les points mémoire appropriés, au moyen d'un signal d'adresse appliqué en entrée de la partie adressage en écriture ADDE de cette mémoire 7.

Il est représenté trois parties de l'image de chaque zone, respectivement P1a, P2a, P3a et P1b, P2b, P3b qui viennent d'être rafraîchies. On voit que, dans cet exemple, l'information d'image de certains des points d'image, définie par P1a, a été remplacée par l'information d'image fournie par le signal échantillonné P2a qui a suivi P1a. Une pluralité de tels signaux permet de remplir la totalité, ou, au moins, la plus grande partie, de la mémoire 7, dans un temps donné.

Une autre possibilité pour effectuer l'adressage de la mémoire 7 est d'avoir un signal vidéo SV qui fournisse lui-même cette information, par exemple en début de chaque ligne de la trame de l'image, ce qui évite la nécessité d'une synchronisation du dispositif de prise de vue 2 par la base de temps 10. Dans ce cas, une logique de reconnaissance d'adresse reconnaît l'adresse de la ligne dans la trame et commande l'adressage de la mémoire 7. L'homme du métier dans le domaine de l'adressage par auto-routage sera à même d'exécuter le dispositif selon l'invention.

De même, un signal de synchronisation image, fourni par le dispositif de prise de vue 2, peut aussi servir à déterminer l'adresse dans la mémoire 7. Pour ce faire, le signal vidéo SV parvient en permanence à la mémoire 7, qui est alors adressée par les signaux de synchronisation trame et ligne, tout comme un écran de télévision, mais qui n'autorise l'écriture en mémoire que lorsque le signal d'échantillonnage l'autorise.

Cette mémoire 7 est, de façon alternée temporellement avec son écriture, lue de façon synchrone par la base de temps 10, qui lit ainsi les lignes successives de la trame constituant l'image et commande en conséquence le dispositif de visualisation 8. Cette lecture est symbolisée par une liaison allant vers ledit dispositif de visualisation 8 en partant de la mémoire 7, avec un adressage successif, par un dispositif d'adressage en lecture ADDL, schématisé par une flèche, des diverses adresses de la mémoire 7 contenant les informations d'image.

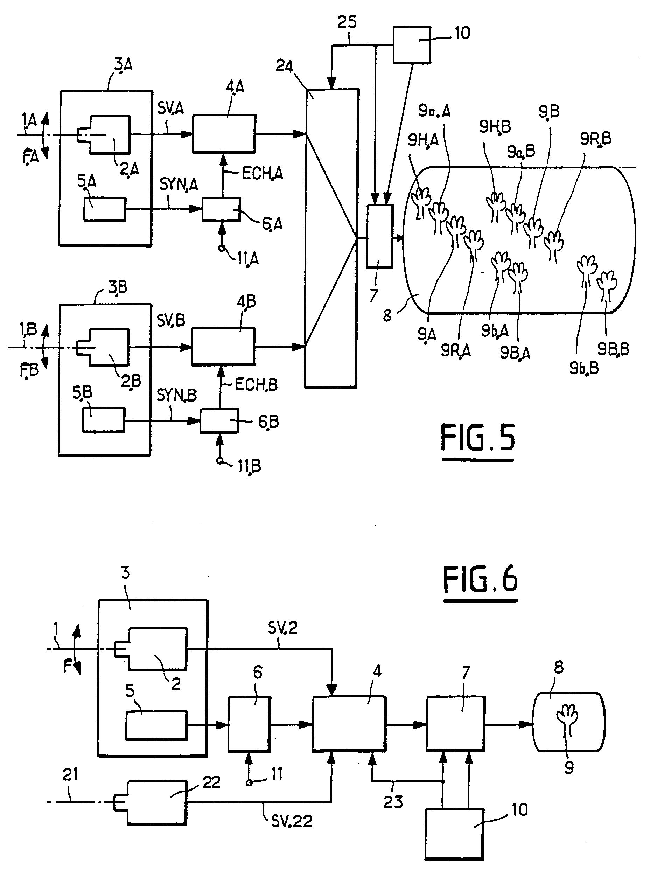

Le schéma représenté sur la figure 4 est destiné à permettre la détermination de l'erreur d'harmonisation entre la ligne de visée au repos d'un dispositif de prise de vue 2 soumis à des vibrations f, et la ligne de visée 21 d'un second dispositif de prise de vue 22, cette ligne de visée 21 fixe étant orientée sensiblement vers le même champ observé que la ligne de visée 1. Cette scène est située à distance suffisamment grande pour que l'erreur de parallaxe soit négligeable. Par ailleurs, l'échantillonneur 4 comporte une première entrée de signal et une seconde entrée de signal, respectivement 4a et 4b.

Les opérations décrites en regard des figures 1 à 3 sont effectuées comme décrit, le premier dispositif de prise de vue 2 fournissant un premier signal vidéo SV1 appliqué à la première entrée de signal 4a de l'échantillonneur 4, tandis que le second dispositif de prise de vue 22 délivre un second signal vidéo SV2 appliqué à la seconde entrée de signal 4b dudit échantillonneur 4. De plus, la base de temps 10 fournit, par une liaison 23, un signal de commutation appliqué à l'échantillonneur 4 et à la mémoire 7, qui a pour effet d'aiguiller alternativement, vers la sortie dudit échantillonneur 4, le signal échantillonné provenant de la première entrée de signal 4a ou de la seconde entrée de signal 4b. La mémoire 7 reçoit ainsi, et range de façon appropriée, des tronçons de signaux vidéo lui permettant de fournir une première image reconstituée au repos 9R.2 et une seconde image reconstituée au repos 9R.22 provenant respectivement des deux dispositifs de prise de vue 2 et 22, et peut alors les faire se superposer sur le dispositif de visualisation 8, par entrelacement ou alternance rapide.

La détermination de la position de la première image reconstituée au repos 9R.2 s'effectue comme expliqué précédemment, en repérant les positions extrêmes 9H.2 et 9B.2 du déplacement de la première image reconstituée 9.2, ou en obtenant deux premières images reconstruites 9a.2 et 9b.2, disposées symétriquement par rapport à la première image reconstruite au repos 9R.2.

Les décalages horizontal H et vertical V entre lesdites images reconstituées au repos 9R.2 et 9R.22 sont respectivement significatifs de l'erreur d'harmonisation entre les dispositifs de prise de vue 2 et 22.

Pour effectuer le réglage de l'harmonisation, il suffit alors de faire pivoter l'un des deux dispositifs de prise de vue 2 ou 22 de façon à rapprocher les deux images reconstituées au repos 9R.2 et 9R.22 respectives, jusqu'à ce qu'elles se confondent.

La figure 5 illustre un procédé de détermination de l'erreur d'harmonisation entre une première ligne de visée 1.A d'un premier dispositif de prise de vue 2.A et une seconde ligne de visée 1.B d'un second dispositif de prise de vue 2.B, chacun respectivement solidaire d'un châssis 3.A et 3.B, susceptible d'être soumis respectivement à des premières vibrations f.A et à des secondes vibrations f.B, qui peuvent être de fréquences différentes, ou simplement de phases différentes.

Chaque dispositif de prise de vue 2.A et 2.B fournit respectivement un premier signal vidéo SV.A et un second signal vidéo SV.B, échantillonnés respectivement, comme expliqué en regard de la figure 1, par un premier échantillonneur 4.A et par un second échantillonneur 4.B recevant respectivement un premier signal d'échantillonnage ECH.A et un second signal d'échantillonnage ECH.B issus respectivement d'un premier circuit de mise en forme 6.A, pouvant avoir une entrée 11.A de réglage du retard et d'un second circuit de mise en forme 6.B pouvant avoir une entrée 11.B de réglage du retard. Un premier détecteur de mouvement 5.A, solidaire du premier châssis 3.A, fournit, audit premier circuit de mise en forme 6.A, un premier signal de synchronisation SYN.A, tandis qu'un second détecteur de mouvement 5.B, solidaire du second châssis 3.B, fournit, audit second circuit de mise en forme 6.B, un second signal de synchronisation SYN.B.

La description relative aux différentes étapes, ainsi que les variantes possibles, expliquées en regard des figures 1 à 4, est valable à nouveau. Cependant, avant l'accès en écriture à la mémoire 7, il est interposé une étape de commutation, réalisée au moyen d'un commutateur 24, recevant, sur une première entrée de signal, le premier signal vidéo échantillonné issu du premier échantillonneur 4.A et recevant, sur une seconde entrée de signal, le second signal vidéo échantillonné issu du second échantillonneur 4.B. Ce commutateur 24 reçoit, en provenance de la base de temps 10, par une liaison 25, un signal de commutation appliqué à une entrée de commande de commutation, qui a pour effet de faire apparaître alternativement, sur une sortie dudit commutateur 24 reliée à la mémoire 7, le premier signal vidéo échantillonné ou le second signal vidéo échantillonné. La mémoire 7 reçoit ce signal de commutation, ce qui lui permet de déterminer l'adresse d'écriture.

On détermine ainsi la position d'une première image reconstituée au repos 9R.A et d'une seconde image reconstituée au repos 9R.B. Cette détermination de la position peut s'effectuer en déterminant les positions extrêmes de déplacement 9H.A,9B.A et 9H.B,9B.B de, respectivement, la première image reconstituée 9.A et la seconde image reconstituée 9.B, ceci en agissant sur une entrée de commande de retard 11.A et 11.B des circuits de mise en forme respectifs 6.A et 6.B. Il est aussi possible de créer une paire de premières images 9a.A et 9b.A et une paire de secondes images 9a.B et 9b.B, disposées symétriquement par rapport à la position de l'image reconstituée au repos 9R.A ou 9R.B correspondante.

Les autres étapes, de détermination de l'erreur d'harmonisation et de correction de cette erreur, sont identiques à celles exposées en regard de la figure 4.

Le schéma de principe représenté sur la figure 6 illustre un dispositif permettant de déterminer l'orientation de la ligne de visée 1 d'un dispositif de prise de vue 2 soumis à des vibrations f, ainsi qu'un dispositif permettant de déterminer l'erreur d'harmonisation entre les lignes de visée respectives 1 et 21 d'un premier dispositif de prise de vue 2 et d'un second dispositif de prise de vue 22, et de la corriger.

Le fonctionnement correspond à celui décrit en regard de la figure 4.

Les dispositifs de prise de vue 2 et 22 sont constitués chacun d'une caméra vidéo fournissant respectivement un premier signal vidéo SV.2 et un second signal vidéo SV.22 respectivement représentatifs des lignes successives de la trame d'une première image du premier dispositif de prise de vue 2 et d'une seconde image du second dispositif de prise de vue 22, respectivement représentatives du champ de la caméra concernée. L'échantillonneur 4 est constitué, sur chaque entrée de signal, d'une porte analogique à large bande passante et à dynamique suffisante pour ne pas déformer le signal vidéo. Le détecteur de mouvement 5 est un accéléromètre apte à détecter une valeur prédéterminée de l'accélération, et éventuellement apte à détecter une valeur absolue prédéterminée de cette accélération, pour fournir deux signaux de synchronisation par période T de vibration f. Le circuit de mise en forme 6 est un circuit monostable, fournissant une impulsion de durée déterminée en réponse au signal de synchronisation, avec, en série, un circuit à retard réglable, par exemple un circuit comportant un circuit résistif et un condensateur, placé en entrée dudit circuit monostable, le circuit résistif comportant un potentiomètre commandé par l'entrée de commande de retard 11. La mémoire 7 est une mémoire analogique à grande bande passante, ou bien une mémoire numérique, à entrée associée à un convertisseur analogique/numérique, et à sortie associée à un convertisseur numérique/analogique si le dispositif de visualisation 8 est un écran vidéo à commande analogique fournissant une image 9. Le signal vidéo mémorisé peut contenir les informations de synchronisation ligne et trame du signal issu du dispositif de prise de vue 2 ou 22, ce qui permet de commander directement la synchronisation de l'écran vidéo.

La base de temps 10 est constituée d'un oscillateur à quartz commandant un diviseur numérique de fréquence Fournissant les signaux de séquencement du fonctionnement de la mémoire 7 et de commutation, ce dernier signal ayant pour effet de bloquer, selon son état, l'une ou l'autre des deux portes analogues de l'échantillonneur 4.

Il apparaîtra à l'homme du métier que la description ci-dessus permet de réaliser des dispositifs aptes à mettre en oeuvre les procédés décrits.

En particulier, dans le cas où l'objet visé n'est pas à l'infini, ce qui est fréquent lorsque l'harmonisation doit se faire dans un site peu dégagé, par exemple pour des hélicoptères militaires en vol tactique à basse altitude, l'erreur de parallaxe peut être calculée et corrigée en site et en gisement de façon connue en tenant compte de la position relative des deux caméras dans le repère lié à la structure support de celles-ci et de la distance entre l'objet visé et lesdites caméras.

Si ds est la distance en site entre les deux caméras, et si dg est la distance en gisement entre les deux caméras et que par ailleurs D est la distance entre la caméra donnant la ligne de visée de référence et l'objet de visée, mesurée au moyen d'un télémètre par exemple, la correction de parallaxe en site sera égale à ds/D radian et la correction de parallaxe en gisement sera égale à dg/D radian.

A partir de la position des caméras telles que leurs images respectives sont superposées, il faudra pivoter l'autre caméra des angles ainsi calculés pour que les deux lignes de visée soient parallèles.

## Revendications

1. Procédé pour la détermination de la position au repos de la ligne de visée (1) d'un dispositif de prise de vue (2), soumis à des vibrations (f) périodiques et délivrant un signal vidéo représentatif de l'image du champ qu'il observe,
caractérisé en ce qu'il comporte les étapes suivantes :
- on détecte lesdites vibrations (f) et, à partir d'elles, on engendre une succession de signaux de synchronisation ayant chacun une phase déterminée et identique dans la période (T) desdites vibrations (f) ;
- on engendre, à partir de ladite succession de signaux de synchronisation, une succession de signaux d'échantillonnage ayant chacun un même retard réglable par rapport au signal de synchronisation correspondant ;
- on échantillonne ledit signal vidéo au moyen de la succession desdits signaux d'échantillonnage, ce qui fournit une succession de signaux vidéo échantillonnés ;
- on reconstitue, sur un dispositif de visualisation (8), ladite image, au moyen de la succession desdits signaux vidéo échantillonnés, ce qui fournit une image reconstituée (9) ; et
- on détermine la position de l'image reconstituée au repos (9R) correspondant à la ligne de visée (1) au repos, à partir de l'image reconstituée (9).

2. Procédé selon la revendication 1,
caractérisé en ce qu'on détermine la position de l'image reconstituée au repos (9R) correspondant à la ligne de visée (1) au repos, au moyen des étapes suivantes :
- on détermine les positions extrêmes (9H,9B) du déplacement de l'image reconstituée (9) sur le dispositif de visualisation (8), en faisant varier ledit retard réglable ; et
- on ajuste ledit retard réglable de façon telle que l'image reconstituée (9) occupe une position à mi-distance entre lesdites positions extrêmes (9H,9B).

3. Procédé selon la revendication 1 ou 2,
caractérisé en ce qu'on engendre, lors de chaque période (T) de la vibration (f), deux signaux de synchronisation espacés d'une demi-période de vibration (f), ce qui entraîne la formation d'une paire d'images reconstituées (9a,9b).

4. Procédé selon la revendication 3,
caractérisé en ce qu'on ajuste ledit retard réglable, de façon à superposer les images reconstituées (9a,9b) de ladite paire d'images reconstituées, sur le dispositif de visualisation (8).

5. Procédé d'harmonisation d'un premier dispositif de prise de vue (2), soumis à des vibrations (f) périodiques, par rapport à un second dispositif de prise de vue (22), orienté de façon fixe sensiblement dans la même direction que ledit premier dispositif de prise de vue (2), fournissant respectivement un premier signal vidéo et un second signal vidéo, respectivement représentatifs d'une première image et d'une seconde image correspondant respectivement à l'image de leur champ observé,
caractérisé en ce qu'il comporte les étapes suivantes :
- on détecte lesdites vibrations (f) et, à partir d'elles, on engendre une succession de signaux de synchronisation ayant chacun une phase déterminée et identique dans la période (T) desdites vibrations ;
- on engendre, à partir de ladite succession de signaux de synchronisation, une succession de signaux d'échantillonnage ayant chacun un même retard réglable par rapport au signal de synchronisation correspondant ;
- on échantillonne alternativement lesdits premier signal vidéo et second signal vidéo au moyen de la succession desdits signaux d'échantillonnage, ce qui fournit une succession de premiers signaux vidéo échantillonnés et de seconds signaux vidéo échantillonnés ;
- on reconstitue, sur un dispositif de visualisation (8), lesdites première image et seconde image, au moyen de la succession desdits signaux vidéo échantillonnés, ce qui fournit une première image reconstituée (9.2) et une seconde image reconstituée au repos (9R.22) ;
- on détermine les positions respectives de la première image reconstituée au repos (9R.2) et de la seconde image reconstituée au repos (9R.22) correspondant respectivement à la ligne de visée (1) au repos du premier dispositif de prise de vue (2) et à la ligne de visée (21) du second dispositif de prise de vue (22), à partir de la première image reconstituée (9.2) et de la seconde image reconstituée au repos (9R.22) ; et
- on détermine, à partir desdites positions respectives de la première image reconstituée au repos (9R.2) et de la seconde image reconstituée au repos (9R.22), l'écart angulaire d'harmonisation desdits premier dispositif de prise de vue (2) et second dispositif de prise de vue (22).

6. Procédé selon la revendication 5, selon lequel la détermination des positions respectives de la première image reconstituée au repos (9R.2) et de la seconde image reconstituée au repos (9R.22) est caractérisée par les étapes suivantes :
- on détermine les positions extrêmes (9H.2, 9B.2) du déplacement de la première image reconstituée (9.2) en faisant varier ledit retard réglable ; et
- on ajuste ledit retard réglable de façon telle que ladite première image reconstituée (9.2) occupe une position à mi-distance entre lesdites positions extrêmes (9H.2, 9B.2).

7. Procédé selon la revendication 5,
caractérisé en ce qu'on engendre, pendant chaque période (T) de la vibration (f), deux signaux de synchronisation (S1a, S1b) espacés d'une demi-période de vibration (f), ce qui entraîne la formation d'une paire de premières images reconstituées (9a.2, 9b.2) et d'une seconde image reconstituée au repos (9R.22), correspondant respectivement au premier signal vidéo et au second signal vidéo.

8. Procédé selon la revendication 7,
caractérisé en ce qu'on ajuste-ledit retard réglable de façon que, sur le dispositif de visualisation (8), les deux images reconstituées de ladite paire de premières images reconstituées (9a.2, 9b.2) se superposent.

9. Procédé selon l'une quelconque des revendications 5 à 8, appliqué à un premier dispositif de prise de vue (2) et à un second dispositif de prise de vue (22), dont au moins l'un est apte à pivoter, sous l'effet d'une commande de pivotement, selon une direction de pivotement permettant de régler l'harmonisation desdits dispositifs de prise de vue (2,22),
caractérisé en ce qu'il est suivi de l'étape suivante :
- on actionne ladite commande de pivotement de façon à rapprocher entre elles lesdites première image reconstituée au repos (9R.2) et seconde image reconstituée au repos (9R.22).

10. Procédé de détermination de l'erreur d'harmonisation d'une première ligne de visée (1.A) d'un premier dispositif de prise de vue (2.A), soumis à des premières vibrations (f.A) périodiques, par rapport à une seconde ligne de visée (1.B) d'un second dispositif de prise de vue (2.B), soumis à des secondes vibrations (f.B) périodiques, orienté sensiblement dans la même direction que ledit premier dispositif de prise de vue (2.A), fournissant respectivement un premier signal vidéo et un second signal vidéo, respectivement représentatifs de l'image de leur champ observé,
caractérisé en ce qu'il comporte les étapes suivantes :
- on détecte lesdites premières vibrations (f.A) et, à partir d'elles, on engendre une succession de premiers signaux de synchronisation ayant chacun une phase déterminée et identique dans la période (T.A) desdites premières vibrations (f.A) ;
- on détecte lesdites secondes vibrations (f.B) et, à partir d'elles, on engendre une succession de seconds signaux de synchronisation ayant chacun une phase déterminée dans la période (T.B) de chacune desdites secondes vibrations (f.B) ;
- on engendre, à partir de ladite succession de premiers signaux de synchronisation, une succession de premiers signaux d'échantillonnage ayant chacun un même retard réglable par rapport au premier signal de synchronisation correspondant ;
- on engendre, à partir de ladite succession de seconds signaux de synchronisation, une succession de seconds signaux d'échantillonnage ayant chacun un même retard réglable par rapport au second signal de synchronisation correspondant ;
- on échantillonne lesdits premier signal vidéo et second signal vidéo au moyen, respectivement, de la succession desdits premier signal d'échantillonnage et second signal d'échantillonnage, ce qui fournit respectivement une succession de premiers signaux vidéo échantillonnés et une succession de seconds signaux vidéo échantillonnés ;
- on reconstitue, sur un dispositif de visualisation (8), lesdites première image et seconde image, au moyen desdites succession de premiers signaux vidéo échantillonnés et succession de seconds signaux échantillonnés, ce qui fournit une première image reconstituée (9.A) et une seconde image reconstituée (9.B) ;
- on détermine les positions respectives de la première image reconstituée au repos (9R.A) et de la seconde image reconstituée au repos (9R.B) correspondant respectivement à la ligne de visée (1.A) au repos du premier dispositif de prise de vue (2.A) et à la ligne de visée (1.B) au repos du second dispositif de prise de vue (2.B), à partir des première image reconstituée (9.A) et seconde image reconstituée (9.B) ; et
- on détermine, à partir desdites positions respectives de la première image reconstituée au repos (9R.A) et de la seconde image reconstituée au repos (9R.B), l'écart angulaire d'harmonisation desdites première ligne de visée (1.A) et seconde ligne de visée (1.B).

11. Procédé selon la revendication 10,
caractérisé en ce qu'on détermine les positions respectives de la première image reconstituée au repos (9R.A) correspondant à la première ligne de visée (1.A) au repos et de la seconde image reconstituée au repos (9R.B) correspondant à la seconde ligne de visée (1.B) au repos, au moyen des étapes suivantes :
- on détermine les premières positions extrêmes (9H.A, 9B.A) du déplacement de la première image reconstituée (9.A) du premier dispositif de prise de vue (2.A) en faisant varier ledit premier retard réglable ;
- on ajuste ledit premier retard réglable de façon telle que ladite première image reconstituée (9.A) occupe une position à mi-distance entre lesdites premières positions extrêmes (9H.A, 9B.A) ;
- on détermine les secondes positions extrêmes (9H.B, 9B.B) du déplacement de la seconde image reconstituée (9.B) du second dispositif de prise de vue (2.B), en faisant varier ledit second retard réglable ; et
- on ajuste ledit second retard réglable de façon telle que ladite seconde image reconstituée (9.B) occupe une position à mi-distance entre lesdites secondes positions extrêmes (9H.B, 9B.B).

12. Procédé selon la revendication 10 ou 11,
caractérisé en ce qu'on engendre deux signaux de synchronisation espacés d'une demi-période de vibration (f.A, f.B), ce qui entraîne la formation d'une paire de premières images reconstituées (9a.A, 9b.A) et d'une paire de secondes images reconstituées (9a.B, 9b.B), correspondant respectivement au premier signal vidéo et au second signal vidéo.

13. Procédé selon la revendication 12,
caractérisé en ce qu'on ajuste lesdits premier retard réglable et second retard réglable, de façon que, pour chaque paire desdites images reconstituées (9a.A,9b.A ; 9a.B,9b.B), lesdites première image reconstituée et seconde image reconstituée se superposent, sur le dispositif de visualisation (8).

14. Procédé selon l'une quelconque des revendications 10 à 13, appliqué à un premier dispositif de prise de vue (2.A) et à un second dispositif de prise de vue (2.B), dont au moins l'un est apte à pivoter, sous l'effet d'une commande de pivotement, selon une direction de pivotement permettant de régler l'harmonisation desdits dispositifs de prise de vue (2.A, 2.B),
caractérisé en ce qu'il est suivi de l'étape suivante :
- on actionne ladite commande de pivotement de façon à rapprocher les images reconstituées respectives, relatives à la direction au repos (9R.A, 9R.B) du premier dispositif de prise de vue (2.A) et du second dispositif de prise de vue (2.B).

15. Dispositif de détermination de l'orientation, par rapport à un repère fixe, de la ligne de visée (1) au repos d'un premier dispositif de prise de vue (2) soumis à des vibrations (f), et fournissant un premier signal vidéo représentatif de l'image de son champ, caractérisé en ce qu'il comporte :
- un détecteur de mouvement (5), détectant lesdites vibrations (f), et produisant un signal de synchronisation ayant une phase déterminée et identique par rapport auxdites vibrations (f) ;
- un circuit de mise en forme (6), recevant ledit signal de synchronisation et fournissant, en réponse, un signal d'échantillonnage ;
- un échantillonneur (4), recevant ledit premier signal vidéo sur une première entrée de signal, apte à échantillonner ledit premier signal vidéo et à fournir un premier signal vidéo échantillonné, sous la commande dudit signal d'échantillonnage appliqué à une entrée de commande d'échantillonnage ;
- une mémoire (7), recevant et mémorisant ledit premier signal vidéo échantillonné ;
- un dispositif de visualisation (8), recevant, de ladite mémoire (7), une information d'image et fournissant, en réponse, une image reconstituée (9) ;
- une base de temps (10), commandant le séquencement du fonctionnement de ladite mémoire (7).

16. Dispositif selon la revendication 15,
caractérisé en ce que ledit circuit de mise en forme (6) fournit un signal de commande d'échantillonnage retardé par rapport audit signal de synchronisation.

17. Dispositif selon la revendication 15 ou 16,
caractérisé en ce que ledit détecteur de mouvement (5) fournit deux signaux de synchronisation lors de chaque période (T) desdites vibrations (f), espacés de la moitié de ladite période (T).

18. Dispositif selon la revendication 16 ou 17,
caractérisé en ce que ledit circuit de mise en forme (6) comporte une entrée de commande de retard (11) permettant de régler ledit retard.

19. Dispositif de détermination de l'erreur d'harmonisation entre une première ligne de visée (1) d'un premier dispositif de prise de vue (2) associé à un dispositif pour la détermination de la position au repos de cette première ligne de visée (1), selon l'une quelconque des revendications 15 à 18, et une seconde ligne de visée (21) d'un second dispositif de prise de vue (22), orientée de façon fixe sensiblement dans la même direction que ladite première ligne de visée (1), fournissant un second signal vidéo représentatif d'une seconde image représentant le champ qu'il observe, caractérisé en ce que ledit second signal vidéo est appliqué à une seconde entrée de signal dudit échantillonneur (4), et en ce que ladite base de temps (10) fournit, audit échantillonneur (4), un signal de commutation faisant alternativement apparaître, en sortie dudit échantillonneur (4), un signal vidéo échantillonné respectivement représentatif desdits premier signal vidéo et second signal vidéo.

## Claims

1. Method for determining the stationary position of the line of sight (1) of a filming device (2), subject to periodic vibrations (f) and delivering a video signal representing the image of the field which it is observing,
characterized in that it includes the following steps:
- the said vibrations (f) are detected and from them is generated a succession of synchronizing signals each having a specified and identical phase within the period (T) of the said vibrations (f);
- from the said succession of synchronizing signals is generated a succession of sampling signals each having a same adjustable delay with respect to the corresponding synchronizing signal;
- the said video signal is sampled by means of the succession of the said sampling signals, this providing a succession of sampled video signals;
- the said image is reconstituted, on a display device (8), by means of the succession of the said sampled video signals, this providing a reconstituted image (9); and
- the position of the stationary reconstituted image (9R) corresponding to the stationary line of sight (1) is determined from the reconstituted image (9).

2. Method according to Claim 1, characterized in that the position of the stationary reconstituted image (9R) corresponding to the stationary line of sight (1) is determined by means of the following steps:
- the extreme positions (9H,9B) are determined of the displacement of the reconstituted image (9) on the display device (8), by varying the said adjustable delay; and
- the said adjustable delay is set in such a way that the reconstituted image (9) occupies a position midway between the said extreme positions (9H, 9B).

3. Method according to Claim 1 or 2, characterized in that, during each period (T) of the vibration (f), two synchronizing signals are generated spaced half a vibration period (f) apart, this causing the formation of a pair of reconstituted images (9a,9b).

4. Method according to Claim 3, characterized in that the said adjustable delay is set in such a way as to superimpose the reconstituted images (9a,9b) of the said pair of reconstituted images, on the display device (8).

5. Method of harmonizing a first filming device (2), subject to periodic vibrations (f), with respect to a second filming device (22) oriented fixedly substantially in the same direction as the said first filming device (2), providing respectively a first video signal and a second video signal, representing respectively a first image and a second image corresponding respectively to the image of their observed field, characterized in that it comprises the following steps:
- the said vibrations (f) are detected and from them is generated a succession of synchronizing signals each having a specified and identical phase within the period (T) of the said vibrations;
- from the said succession of synchronizing signals is generated a succession of sampling signals each having a same adjustable delay with respect to the corresponding synchronizing signal;
- the said first video signal and second video signal are sampled alternately by means of the succession of the said sampling signals, this providing a succession of first sampled video signals and second sampled video signals;
- the said first image and second image are reconstituted on a display device (8) by means of the succession of the said sampled video signals, this providing a first reconstituted image (9.2) and a second stationary reconstituted image (9R.22);
- the respective positions are determined of the first stationary reconstituted image (9R.2) and of the second stationary reconstituted image (9R.22) corresponding respectively to the stationary line of sight (1) of the first filming device (2) and to the line of sight (21) of the second filming device (22), from the first reconstituted image (9.2) and the second stationary reconstituted image (9R.22); and
- from the said respective positions of the first stationary reconstituted image (9R.2) and of the second stationary reconstituted image (9R.22) is determined the angular harmonization deviation of the said first filming device (2) and second filming device (22).

6. Method according to Claim 5, according to which the determination of the respective positions of the first stationary reconstituted image (9R.2) and of the second stationary reconstituted image (9R.22), is characterized by the following steps:
- the extreme positions (9H.2, 9B.2) are determined of the displacement of the first reconstituted image (9.2) by varying the said adjustable delay; and
- the said adjustable delay is set in such a way that the said first reconstituted image (9.2) occupies a position midway between the said extreme positions (9H.2, 9B.2).

7. Method according to Claim 5, characterized in that, during each period (T) of the vibration (f), two synchronizing signals (S1a, S1b) are generated spaced apart by half a vibration period (f), this causing the formation of a pair of first reconstituted images (9a.2, 9b.2) and of a second stationary reconstituted image (9R.22), corresponding respectively to the first video signal and to the second video signal.

8. Method according to Claim 7, characterized in that the said adjustable delay is set in such a way that, on the display device (8), the two reconstituted images of the said pair of first reconstituted images (9a.2, 9b.2) are superimposed.

9. Method according to any one of Claims 5 to 8, applied to a first filming device (2) and to a second filming device (22), at least one of which is able to swivel, under the effect of a swivel command, in a direction of swivel permitting adjustment of the harmonization of the said filming devices (2,22), characterized in that it is followed by the following step:
- the said swivel command is activated in such a way as to bring the said first stationary reconstituted image (9R.2) and second stationary reconstituted image (9R.22) towards one another.

10. Method of determining the harmonization error of a first line of sight (1.A) of a first filming device (2.A), subject to first periodic vibrations (f.A), with respect to a second line of sight (1.B) of a second filming device (2.B), subject to second periodic vibrations (f.B), oriented substantially in the same direction as the said first filming device (2.A), providing respectively a first video signal and a second video signal, respectively representing the image of their observed field,
characterized in that it comprises the following steps:
- the said first vibrations (f.A) are detected and from them is generated a succession of first synchronizing signals each having a specified and identical phase within the period (T.A) of the said first vibrations (f.A);
- the said second vibrations (f.B) are detected and from them is generated a succession of second synchronizing signals each having a specified phase within the period (T.B) of each of the said second vibrations (f.B);
- from the said succession of first synchronizing signals is generated a succession of first sampling signals each having the same adjustable delay with respect to the first corresponding synchronizing signal;
- from the said succession of second synchronizing signals is generated a succession of second sampling signals each having the same adjustable delay with respect to the second corresponding synchronizing signal;
- the said first video signal and second video signal are sampled by means, respectively, of the succession of the said first sampling signal and second sampling signal, this providing respectively a succession of first sampled video signals and a succession of second sampled video signals;
- the said first image and second image are reconstituted on a display device (8) by means of the said succession of first sampled video signals and succession of second sampled signals, this providing a first reconstituted image (9.A) and a second reconstituted image (9.B);
- the respective positions are determined of the first stationary reconstituted image (9R.A) and of the second stationary reconstituted image (9R.B) corresponding respectively to the stationary line of sight (1.A) of the first filming device (2.A) and to the stationary line of sight (1.B) of the second filming device (2.B), from the first reconstituted image (9.A) and second reconstituted image (9.B); and
- from the said respective positions of the first stationary reconstituted image (9R.A) and of the second stationary reconstituted image (9R.B) is determined the angular harmonization deviation of the said first line of sight (1.A) and second line of sight (1.B).

11. Method according to Claim 10, characterized in that the respective positions are determined of the first stationary reconstituted image (9R.A) corresponding to the first stationary line of sight (1.A) and of the second stationary reconstituted image (9R.B) corresponding to the second stationary line of sight (1.B), by means of the following steps:
- the first extreme positions (9H.A, 9B.A) are determined of the displacement of the first reconstituted image (9.A) of the first filming device (2.A) by varying the said first adjustable delay;
- the said first adjustable delay is set in such a way that the said first reconstituted image (9.A) occupies a position midway between the said first extreme positions (9H.A, 9B.A);
- the second extreme positions (9H.B, 9B.B) are determined of the displacement of the second reconstituted image (9.B) of the second filming device (2.B) by varying the said second adjustable delay;
- the said second adjustable delay is set in such a way that the said second reconstituted image (9.B) occupies a position midway between the said second extreme positions (9H.B, 9B.B).

12. Method according to Claim 10 or 11, characterized in that two synchronizing signals are generated spaced apart by half a vibration period (f.A, f.B), this causing the formation of a pair of first reconstituted images (9a.A, 9b.A) and of a pair of second reconstituted images (9a.B, 9b.B), corresponding respectively to the first video signal and to the second video signal.

13. Method according to Claim 12, characterized in that the said first adjustable delay and second adjustable delay are set in such a way that, for each pair of the said reconstituted images (9a.A,9b.A ; 9a.B,9b.B), the said first reconstituted image and second reconstituted image are superimposed, on the display device (8).

14. Method according to any one of Claims 10 to 13, applied to a first filming device (2.A) and to a second filming device (2.B), at least one of which is able to swivel, under the effect of a swivel command, in a direction of swivel permitting adjustment of the harmonization of the said filming devices (2.A, 2.B),
characterized in that it is followed by the following step:
- the said swivel command is activated in such a way as to bring together the respective reconstituted images relating to the stationary direction (9R.A, 9R.B) of the first filming device (2.A) and of the second filming device (2.B).

15. Device for determining the orientation, with respect to a fixed reference frame, of the stationary line of sight (1) of a first filming device (2) subject to vibrations (f), and providing a first video signal representing the image of its field,
characterized in that it comprises:
- a motion detector (5) detecting the said vibrations (f), and producing a synchronizing signal having a specified and identical phase with respect to the said vibrations (f);
- a shaping circuit (6) receiving the said synchronizing signal and providing, in response, a sampling signal;
- a sampler (4) receiving the said first video signal on a first signal input, able to sample the said first video signal and provide a first sampled video signal, under the control of the said sampling signal applied to a sampling control input;
- a memory (7), receiving and storing the said first sampled video signal;
- a display device (8), receiving, from the said memory (7), an image information item and providing, in response, a reconstituted image (9);
- a time base (10) controlling the sequencing of the operation of the said memory (7).

16. Device according to Claim 15, characterized in that the said shaping circuit (6) provides a sampling control signal delayed with respect to the said synchronizing signal.

17. Device according to Claim 15 or 16, characterized in that the said motion detector (5) provides two synchronizing signals during each period (T) of the said vibrations (f), the said signals being spaced apart by half the said period (T).

18. Device according to Claim 16 or 17, characterized in that the said shaping circuit (6) comprises a delay control input (11) enabling the said delay to be adjusted.

19. Device for determining the harmonization error between a first line of sight (1) of a first filming device (2) associated with a device for determining the stationary position of this first line of sight (1), according to any one of Claims 15 to 18, and a second line of sight (21) of a second filming device (22) oriented fixedly substantially in the same direction as the said first line of sight (1), providing a second video signal representing a second image representing the field which it is observing,
characterized in that the said second video signal is applied to a second signal input of the said sampler (4), and in that the said time base (10) provides the said sampler (4) with a switching signal making a sampled video signal representing respectively the said first video signal and second video signal appear alternately at the output of the said sampler (4).

## Patentansprüche

1. Verfahren zur Bestimmung der Position bei Ruhe der Visierlinie (1) einer Aufnahmevorrichtung (2), die periodischen Schwingungen (f) ausgesetzt ist und ein Videosignal abgibt, das für das Bild des Beobachtungsfeldes repräsentativ ist, dadurch gekennzeichnet, daß sie folgende Stufen umfaßt:
- Erfassung der Schwingungen (f) und auf deren Grundlage Erzeugung einer Folge von Synchronsignalen, die in der Periode (T) der Schwingungen (f) jeweils eine bestimmte identische Phase haben;
- aus der Folge der Synchronsignale Erzeugung einer Folge von Abtastsignalen, die zum entsprechenden Synchronsignal jeweils die gleiche einstellbare Verzögerung haben;
- Abtastung des Videosignals mit Hilfe der Folge der Abtastsignale und Erhalt einer Folge abgetasteter Videosignale;
- an einer Anzeigevorrichtung (8) Wiederherstellung des Bildes mit Hilfe der Folge der abgetasteten Videosignale und Erhalt eines wiederhergestellten Bildes (9) und
- aus dem wiederhergestellten Bild (9) Bestimmung der Position des wiederhergestellten Bildes bei Ruhe (9R), das der Visierlinie (1) bei Ruhe entspricht.

2. Verfahren nach Anspruch 1,
dadurch gekennzeichnet, daß die Position des wiederhergestellten Bildes bei Ruhe (9R), das der Visierlinie (1) bei Ruhe entspricht, mit Hilfe folgender Stufen bestimmt wird:
- Bestimmung der äußersten Positionen (9H,9B) der Verschiebung des wiederhergestellten Bildes (9) an der Anzeigevorrichtung (8) durch Änderung der einstellbaren Verzögerung und
- Einstellung der einstellbaren Verzögerung, so daß das wiederhergestellte Bild (9) eine Position in der Mitte zwischen den äußersten Positionen (9H, 9B) einnimmt.

3. Verfahren nach Anspruch 1 oder 2,
dadurch gekennzeichnet, daß in jeder Periode (T) von Schwingung (f) im Abstand einer halben Periode von Schwingung (f) zwei Synchronsignale erzeugt werden, so daß sich ein Paar wiederhergestellter Bilder (9a,9b) ergibt.

4. Verfahren nach Anspruch 3,
dadurch gekennzeichnet, daß die einstellbare Verzögerung eingestellt wird, so daß sich die wiederhergestellten Bilder (9a,9b) des wiederhergestellten Bildpaares an der Anzeigevorrichtung (8) überlagern.

5. Verfahren zur Abstimmung einer ersten, periodischen Schwingungen (f) ausgesetzten Aufnahmevorrichtung (2) gegenüber einer zweiten Aufnahmevorrichtung (22), die fest etwa in der gleichen Richtung wie die erste Aufnahmevorrichtung (2) ausgerichtet ist, welche ein erstes Videosignal bzw. ein zweites Videosignal abgeben, die für ein erstes Bild bzw. ein zweites Bild repräsentativ sind, welche jeweils dem Bild ihres Beobachtungsfeldes entsprechen,
dadurch gekennzeichnet, daß es folgende Stufen umfaßt:
- Erfassung der Schwingungen (f) und auf deren Grundlage Erzeugung einer Folge von Synchronsignalen, die in der Periode (T) der Schwingungen jeweils eine bestimmte identische Phase haben;
- aus der Folge von Synchronsignalen Erzeugung einer Folge von Abtastsignalen, die gegenüber dem entsprechenden Synchronsignal jeweils die gleiche einstellbare Verzögerung haben;
- abwechselnde Abtastung des ersten Videosignals und des zweiten Videosignals mit Hilfe der Abtastsignalfolge und Erhalt einer Folge erster abgetasteter Videosignale und zweiter abgetasteter Videosignale;
- an einer Anzeigevorrichtung (8) Wiederherstellung des ersten Bildes und des zweiten Bildes mit der Folge der abgetasteten Videosignale und Erhalt eines ersten wiederhergestellten Bildes (9.2) und eines zweiten wiederhergestellten Bildes bei Ruhe (9R.22);
- aus dem ersten wiederhergestellten Bild (9.2) und dem zweiten wiederhergestellten Bild bei Ruhe (9R.22) Bestimmung der entsprechenden Positionen des ersten wiederhergestellten Bildes bei Ruhe (9R.2) und des zweiten wiederhergestellten Bildes bei Ruhe (9R.22), die jeweils der Visierlinie (1) bei Ruhe der ersten Aufnahmevorrichtung (2) und der Visierlinie (21) der zweiten Aufnahmevorrichtung (22) entsprechen, und
- aus den entsprechenden Positionen des ersten wiederhergestellten Bildes bei Ruhe (9R.2) und des zweiten wiederhergestellten Bildes bei Ruhe (9R.22) Bestimmung der Abweichung des Abstimmungswinkels der ersten Aufnahmevorrichtung (2) und der zweiten Aufnahmevorrichtung (22).

6. Verfahren nach Anspruch 5, nach dem die Bestimmung der entsprechenden Positionen des ersten wiederhergestellten Bildes bei Ruhe (9R.2) und des zweiten wiederhergestellten Bildes bei Ruhe (9R.22) durch folgende Stufen gekennzeichnet ist:
- Bestimmung der äußersten Positionen (9H.2, 9B.2) der Verschiebung des ersten wiederhergestellten Bildes (9.2) durch Änderung der einstellbaren Verzögerung und
- Einstellung der einstellbaren Verzögerung derart, daß das erste wiederhergestellte Bild (9.2) eine Position in der Mitte zwischen den äußersten Positionen (9H.2, 9B.2) einnimmt.

7. Verfahren nach Anspruch 5,
dadurch gekennzeichnet, daß in jeder Periode (T) der Schwingung (f) zwei Synchronsignale (S1a, S1b) im Abstand einer halben Periode von Schwingung (f) erzeugt werden, so daß sich ein Paar erster wiederhergestellter Bilder (9a.2, 9b.2) und ein zweites wiederhergestelltes Bild bei Ruhe (9R.22) ergibt, die jeweils dem ersten Videosignal und dem zweiten Videosignal entsprechen.

8. Verfahren nach Anspruch 7,
dadurch gekennzeichnet, daß die einstellbare Verzögerung so eingestellt wird, daß sich die beiden wiederhergestellten Bilder des Paars der ersten wiederhergestellten Bilder (9a.2, 9b.2) an der Anzeigevorrichtung (8) überlagern.

9. Verfahren nach einem der Ansprüche 5 bis 8, angewandt auf eine erste Aufnahmevorrichtung (2) und auf eine zweite Aufnahmevorrichtung (22), von denen zumindest eine durch eine Schwenksteuerung in einer Schwenkrichtung geschwenkt werden kann, mit der die Abstimmung der Aufnahmevorrichtungen (2,22) möglich ist,
dadurch gekennzeichnet, daß sich folgende Stufe anschließt:
- Betätigung der Schwenksteuerung, so daß das erste wiederhergestellte Bild bei Ruhe (9R.2) und das zweite wiederhergestellte Bild bei Ruhe (9R.22) einander angenähert werden.

10. Verfahren zur Bestimmung des Abstimmungsfehlers einer ersten Visierlinie (1.A) einer ersten Aufnahmevorrichtung (2.A), die ersten periodischen Schwingungen (f.A) ausgesetzt ist, gegenüber einer zweiten Visierlinie (1.B) einer zweiten Aufnahmevorrichtung (2.B), die zweiten periodischen Schwingungen (f.B) ausgesetzt ist und etwa in der gleichen Richtung wie die erste Aufnahmevorrichtung (2.A) ausgerichtet ist, welche ein erstes Videosignal bzw. ein zweites Videosignal abgeben, die jeweils für das Bild ihres Beobachtungsfeldes repräsentativ sind,
dadurch gekennzeichnet, daß es folgende Stufen umfaßt:
- Erfassung der ersten Schwingungen (f.A) und auf deren Grundlage Erzeugung einer Folge erster Synchronsignale, die in der Periode (T.A) der ersten Schwingungen (f.A) jeweils eine bestimmte identische Phase haben;
- Erfassung der zweiten Schwingungen (f.B) und auf deren Grundlage Erzeugung einer Folge zweiter Synchronsignale, die in der Periode (T.B) jeder der zweiten Schwingungen (f.B) jeweils eine bestimmte Phase haben;
- aus der Folge erster Synchronsignale Erzeugung einer Folge erster Abtastsignale, die gegenüber dem entsprechenden ersten Synchronsignal jeweils die gleiche einstellbare Verzögerung haben;
- aus der Folge zweiter Synchronsignale Erzeugung einer Folge zweiter Abtastsignale, die gegenüber dem entsprechenden zweiten Synchronsignal jeweils die gleiche einstellbare Verzögerung haben;
- Abtastung des ersten Videosignals und des zweiten Videosignals mit der Folge des ersten Abtastsignals bzw. des zweiten Abtastsignals und Erhalt einer Folge erster abgetasteter Videosignale bzw. einer Folge zweiter abgetasteter Videosignale;
- an einer Anzeigevorrichtung (8) Wiederherstellung des ersten Bildes und des zweiten Bildes mit der Folge der ersten abgetasteten Videosignale und der Folge der zweiten abgetasteten Videosignale und Erhalt eines ersten wiederhergestellten Bildes (9.A) und eines zweiten wiederhergestellten Bildes (9.B);
- aus dem ersten wiederhergestellten Bild (9.A) und dem zweiten wiederhergestellten Bild (9.B) Bestimmung der entsprechenden Positionen des ersten wiederhergestellten Bildes bei Ruhe (9R.A) und des zweiten wiederhergestellten Bildes bei Ruhe (9R.B), die der Visierlinie (1.A) bei Ruhe der ersten Aufnahmevorrichtung (2.A) und der Visierlinie (1.B) bei Ruhe der zweiten Aufnahmevorrichtung (2.B) entsprechen, und
- aus den entsprechenden Positionen des ersten wiederhergestellten Bildes bei Ruhe (9R.A) und des zweiten wiederhergestellten Bildes bei Ruhe (9R.B) Bestimmung der Abweichung des Abstimmungswinkels der ersten Visierlinie (1.A) und der zweiten Visierlinie (1.B).

11. Verfahren nach Anspruch 10,
dadurch gekennzeichnet, daß die entsprechenden Positionen des ersten wiederhergestellten Bildes bei Ruhe (9R.A), das der ersten Visierlinie (1.A) bei Ruhe entspricht, und des zweiten wiederhergestellten Bildes bei Ruhe (9R.B), das der zweiten Viserlinie (1.B) bei Ruhe entspricht, mit Hilfe folgender Stufen bestimmt werden:
- Bestimmung der ersten äußersten Positionen (9H.A,9B.A) der Verschiebung des ersten wiederhergestellten Bildes (9.A) der ersten Anzeigevorrichtung (2.A) durch Änderung der ersten einstellbaren Verzögerung;
- Einstellung der ersten einstellbaren Verzögerung derart, daß das erste wiederhergestellte Bild (9.A) eine Position in der Mitte zwischen den ersten äußersten Positionen (9H.A, 9B.A) einnimmt;
- Bestimmung der zweiten äußersten Positionen (9H.B, 9B.B) der Verschiebung des zweiten wiederhergestellten Bildes (9.B) der zweiten Aufnahmevorrichtung (2.B) durch Änderung der zweiten einstellbaren Verzögerung und
- Einstellung der zweiten einstellbaren Verzögerung derart, daß das zweite wiederhergestellte Bild (9.B) eine Position in der Mitte zwischen den zweiten äußersten Positionen (9H.B, 9B.B) einnimmt.

12. Verfahren nach Anspruch 10 oder 11,
dadurch gekennzeichnet, daß zwei Synchronsignale im Abstand einer halben Periode von Schwingung (f.A, f.B) erzeugt werden, so daß ein Paar erster wiederhergestellter Bilder (9a.A, 9b.A) und ein Paar zweiter wiederhergestellter Bilder (9a.B, 9b.B) entstehen, die einem ersten Videosignal bzw. einem zweiten Videosignal entsprechen.

13. Verfahren nach Anspruch 12,
dadurch gekennzeichnet, daß die erste einstellbare Verzögerung und die zweite einstellbare Verzögerung derart eingestellt werden, daß sich für jedes Paar wiederhergestellter Bilder (9a.A,9b.A; 9a.B,9b.B) das erste wiederhergestellte Bild und das zweite wiederhergestellte Bild an der Anzeigevorrichtung (8) überlagern.

14. Verfahren nach einem der Ansprüche 10 bis 13, angewandt auf eine erste Aufnahmevorrichtung (2.A) und eine zweite Aufnahmevorrichtung (2.B), von denen mindestens eine durch eine Schwenksteuerung in einer Schwenkrichtung geschwenkt werden kann, die eine Abstimmung der Aufnahmevorrichtungen (2.A, 2.B) ermöglicht,
dadurch gekennzeichnet, daß sich folgende Stufe anschließt:
- Betätigung der Schwenksteuerung, so daß die entsprechenden wiederhergestellten Bilder für die Richtung bei Ruhe (9R.A, 9R.B) der ersten Aufnahmevorrichtung (2.A) und der zweiten Aufnahmevorrichtung (2.B) einander angenähert werden.

15. Vorrichtung zur Bestimmung der Richtung der Visierlinie (1) bei Ruhe einer ersten, Schwingungen (f) ausgesetzten Aufnahmevorrichtung (2), die ein erstes für das Bild ihres Beobachtungsfeldes repräsentatives Videosignal abgibt, gegenüber einem Festpunkt,
dadurch gekennzeichnet, daß sie umfaßt:
- einen Bewegungsdetektor (5), mit dem die Schwingungen (f) erfaßt werden und der ein Synchronsignal mit einer gegenüber den Schwingungen (f) bestimmten identischen Phase erzeugt;
- einen Impulsformer (6), an den das Synchronsignal gelangt und der als Reaktion ein Abtastsignal abgibt;
- einen Abtaster (4), an den das erste Videosignal an einen ersten Signaleingang gelangt, der das erste Videosignal abtasten kann und gesteuert durch das an einen Eingang Abtaststeuerung angelegte Abtastsignal ein erstes abgetastetes Videosignal abgeben kann;
- einen Speicher (7), an den das erste abgetastete Videosignal gelangt, das von diesem gespeichert wird;
- eine Anzeigevorrichtung (8), an die aus dem Speicher (7) eine Bildinformation gelangt und die als Reaktion ein wiederhergestelltes Bild (9) abgibt;
- eine Zeitbasis (10), die den Arbeitsablauf von Speicher (7) steuert.

16. Vorrichtung nach Anspruch 15,
dadurch gekennzeichnet, daß der Impulsformer (6) ein Signal Abtaststeuerung abgibt, das gegenüber dem Synchronsignal verzögert ist.

17. Vorrichtung nach Anspruch 15 oder 16,
dadurch gekennzeichnet, daß der Bewegungsdetektor (5) in jeder Periode (T) der Schwingungen (f) zwei Synchronsignale im Abstand der Hälfte der Periode (T) abgibt.

18. Vorrichtung nach Anspruch 16 oder 17,
dadurch gekennzeichnet, daß der Impulsformer (6) einen Eingang Verzögerungssteuerung (11) hat, mit dem die Verzögerung eingestellt werden kann.

19. Vorrichtung zur Bestimmung des Abstimmungsfehlers zwischen einer ersten Visierlinie (1) einer ersten Aufnahmevorrichtung (2), die mit einer Vorrichtung zur Bestimmung der Position dieser ersten Visierlinie (1) bei Ruhe verbunden ist, nach einem der Ansprüche 15 bis 18, und einer zweiten Visierlinie (21) einer zweiten Aufnahmevorrichtung (22), die fest etwa in der gleichen Richtung wie die erste Visierlinie (1) ausgerichtet ist und ein zweites Videosignal abgibt, das für ein zweites Bild, das das Beobachtungsfeld darstellt, repräsentativ ist,
dadurch gekennzeichnet, daß das zweite Videosignal an einen zweiten Signaleingang von Abtaster (4) angelegt wird, und dadurch, daß die Zeitbasis (10) an den Abtaster (4) ein Schaltsignal gibt, durch das am Ausgang von Abtaster (4) abwechselnd ein abgetastetes Videosignal anliegt, das für das erste Videosignal bzw. das zweite Videosignal repräsentativ ist.
